# EUROPEAN PATENT APPLICATION

(11) **EP 4 712 283 A1**
(43) Date of publication of application: **18.03.2026**
(21) Application number: 25306109.7
(22) Date of filing: 10.07.2025
(51) Int. Cl.: H02J 1/06, H01R 13/717, H01R 13/66, H01R 24/76

(54) **SOCKET WITH REVERSE CONNECTION INDICATION**

(30) Priority: 11.07.2024 CN 202421648479 U
(71) Applicant: Schneider Electric Industries SAS, 92500 Rueil-Malmaison (FR)
(72) Inventor: LIU, Jingyi, Shenzhen, 518000 (CN); XIONG, Kun, Shenzhen, 518000 (CN); CHEN, Siyuan, Shenzhen, 518000 (CN); ZHANG, Dahai, Shenzen, 518000 (CN); GAO, Shen, Shanghai, 201203 (CN)
(74) Representative: Manitz Finsterwald Patent- und Rechtsanwaltspartnerschaft mbB

(57) **Abstract**

Embodiments of the present disclosure provide a socket including a base including a positive wiring port and a negative wiring port; a diode having an anode coupled to the negative wiring port; a signal control circuit coupled to a cathode of the diode and the positive wiring port to output a control signal when the diode is turned on; and an indicator light coupled to the signal control circuit to operate upon receiving the control signal.

## Description

### FIELD

Embodiments of the present disclosure generally relate to the technical field of electrical equipment, and more particularly, to a socket.

### BACKGROUND

A socket is an electrical interface for connecting electrical equipment, that allows the electrical equipment to be plugged into the socket through a plug to obtain power supply.

A case of reverse wiring of positive and negative electrodes is easy to occur in a process of installing the socket, and if the socket is connected to the electrical equipment, the equipment will be damaged, and even personal safety will be threatened.

### SUMMARY

An object of the present disclosure is to provide a socket to at least partially solve above problems.

In an aspect of the present disclosure, there is provided a socket including a base including a positive wiring port and a negative wiring port; a diode having an anode coupled to the negative wiring port; a signal control circuit coupled to a cathode of the diode and the positive wiring port to output a control signal when the diode is turned on; and an indicator light coupled to the signal control circuit to operate upon receiving the control signal.

According to embodiments of the present disclosure, the diode may be turned on in a case that the positive electrode and the negative electrode of the socket are reversely wired, so that the signal control circuit can control the indicator light to operate, thereby warning a customer. In this way, the customer may change a wiring manner in time after observing that the indicator light operates, so that equipment is prevented from being damaged, and personal safety can be ensured.

In some embodiments, the signal control circuit includes a 555 monostable circuit to output a PWM signal as the control signal to control the indicator light to flash.

In some embodiments, the socket further includes a step-down circuit coupled between the cathode of the diode and the signal control circuit.

In some embodiments, the step-down circuit includes one of a linear step-down circuit and a buck converter circuit.

In some embodiments, the socket further includes a printed circuit board disposed within the base, and the diode, the signal control circuit, the step-down circuit, and the indicator light are integrated on the printed circuit board.

In some embodiments, the indicator light is disposed within the base, and the socket further includes a light guide component disposed within the base adjacent to the indicator light and extending to a location adjacent to a surface of the base.

In some embodiments, the socket further includes a surface cover covering the base, a side of the surface cover facing towards the base is provided with a light-transmitting groove, and an end of the light guide component away from the indicator light is located within the light-transmitting groove.

In some embodiments, the socket is a DC socket.

It should be understood that the description in this section is not intended to limit key features or important features of embodiments of the present disclosure, nor is it intended to limit the scope of the present disclosure. Other features of the present disclosure will be readily understood from the following description.

### BRIEF DESCRIPTION OF DRAWINGS

The above and other features, advantages and aspects of embodiments of the present disclosure will become more apparent with reference to the following detailed description taken in conjunction with drawings. In the drawings, the same or similar reference numerals denote the same or similar elements, wherein:
FIG. 1 illustrates a cross-sectional view of a socket according to some embodiments of the present disclosure;
FIG. 2 illustrates a bottom view of a socket according to some embodiments of the present disclosure;
FIG. 3 illustrates a top view of a socket according to some embodiments of the present disclosure;
FIG. 4 illustrates a schematic circuit diagram of a socket according to some embodiments of the present disclosure;
FIG. 5 illustrates a schematic circuit diagram of a signal control circuit according to some embodiments of the present disclosure.

Description of the reference numerals:
100 is a socket;
1 is a base, 11 is a positive wiring port, and 12 is a negative wiring port;
2 is a printed circuit board;
3 is a diode; 4 is a signal control circuit; 5 is a step-down circuit;
6 is an indicator light; 7 is a light guide component;
8 is a surface cover, and 81 is a light-transmitting groove.

### DETAILED DESCRIPTION

Embodiments of the present disclosure will be described in more detail below with reference to the drawings. Although embodiments of the present disclosure are shown in the drawings, it should be understood that the present disclosure may be implemented in various forms and should not be limited by embodiments set forth herein. Rather, these embodiments are provided to make the present disclosure more thorough and complete, and can fully convey the scope of the present disclosure to those skilled in the art.

As used herein, the term "including" and variations thereof means open inclusive, i.e., "including but not limited to". Unless specifically stated, the term "or" means "and/or". The term "based on" means "based at least in part on". The terms "an example embodiment" and "an embodiment" mean "at least one example embodiment". The term "another embodiment" means "at least one further embodiment". The terms "first," "second," and the like may refer to different or identical objects.

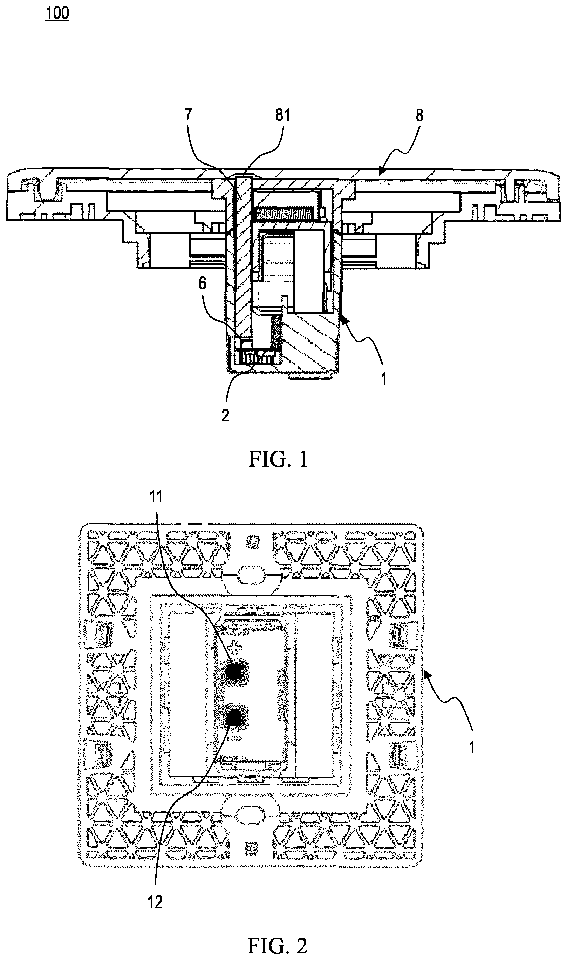

As described above, the case of reverse wiring of positive and negative electrodes is easy to occur in the process of installing the socket, such as a DC socket, and structures of the positive and negative ports on the DC socket are similar. Although the positive and negative ports may have identifiers, it is still difficult to avoid the case of reverse wiring of the positive and negative electrodes. Once the case of reverse wiring occurs, if the electrical equipment does not have a protection circuit, the electrical equipment will be damaged upon being connected, causing property loss and even threatening personal safety. Embodiments of the present disclosure provide a socket 100 to at least partially solve the above problems. Hereinafter, a principle of the present disclosure will be described in conjunction with FIGS. 1 to 5.

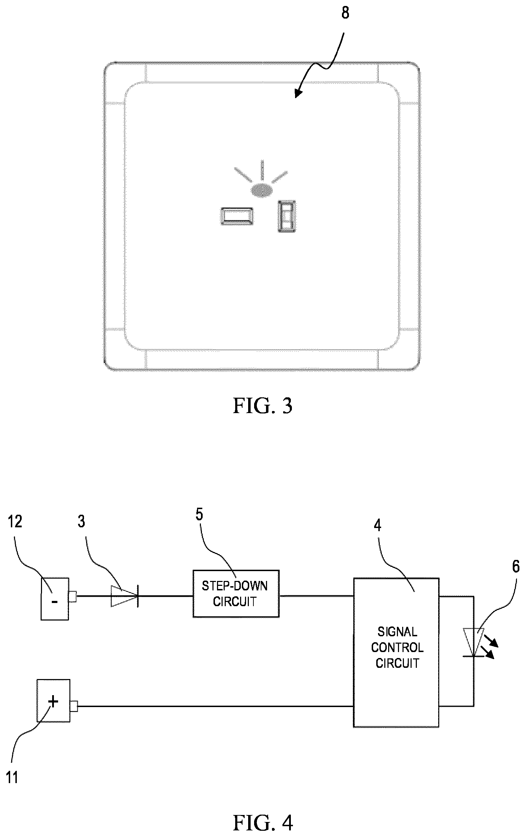

FIG. 1 illustrates a cross-sectional view of a socket 100 according to some embodiments of the present disclosure. FIG. 2 illustrates a bottom view of a socket 100 according to some embodiments of the present disclosure. FIG. 3 illustrates a top view of a socket 100 according to some embodiments of the present disclosure.

FIG. 4 illustrates a schematic circuit diagram of a socket 100 according to some embodiments of the present disclosure. As shown in FIGS. 1 to 4, the socket 100 described herein generally includes a base 1, a printed circuit board 2, a diode 3, a signal control circuit 4, a step-down circuit 5, an indicator light 6, a light guide component 7, and a surface cover 8. The socket 100 is a DC socket.

With continued reference to FIGS. 1 to 4, in some embodiments, the surface cover 8 covers the base 1. The printed circuit board 2 is disposed within the base 1. The diode 3, the signal control circuit 4, the step-down circuit 5, and the indicator light 6 may all be integrated on the printed circuit board 2, so that the diode 3, the signal control circuit 4, the step-down circuit 5, and the indicator light 6 are all disposed within the base 1.

Referring to FIG. 2, in some embodiments, the base 1 may include a positive wiring port 11 and a negative wiring port 12. The positive wiring port 11 is configured to connect to a positive electrode of a DC power supply, and the negative wiring port 12 is configured to connect to a negative electrode of the DC power supply. If the positive wiring port 11 is mistakenly connected to the negative electrode of the DC power supply and the negative wiring port 12 is mistakenly connected to the positive electrode of the DC power supply, the case of reverse wiring of the positive and negative electrodes as described above will occur in the socket 100.

Referring to FIG. 4, in order to avoid the case of reverse wiring of the positive and negative electrodes, an anode of the diode 3 may be coupled to the negative wiring port 12. The signal control circuit 4 is coupled to a cathode of the diode 3, and the signal control circuit 4 is coupled to the positive wiring port 11 to output a control signal when the diode 3 is turned on. The indicator light 6 is coupled to the signal control circuit 4 to operate upon receiving the control signal output by the signal control circuit 4.

With the above arrangement, if the positive wiring port 11 and the negative wiring port 12 are normally wired (i.e., not reversely wired), the diode 3 will be turned off, so that the signal control circuit 4 cannot obtain a working power supply, and thus will not output the control signal. In this case, the indicator light 6 will not operate. Conversely, if the positive wiring port 11 and the negative wiring port 12 are reversely connected, the diode 3 is turned on, so that the signal control circuit 4 can obtain the working power supply, and can output the control signal to control the indicator light 6 to operate.

According to an embodiment of the present disclosure, when the diode 3 is turned on, the signal control circuit 4 can control the indicator light 6 to operate, thereby warning a customer. In this way, the customer may change a wiring manner in time after observing that the indicator light 6 operates, so that the equipment is prevented from being damaged, and personal safety can be ensured.

In addition, in a case of normal wiring, the indicator light 6 does not operate, so as to avoid affecting an appearance of the socket 100 due to the operation of the indicator light 6.

With continued reference to FIG. 4, in some embodiments, the step-down circuit 5 may be coupled between the cathode of the diode 3 and the signal control circuit 4. The step-down circuit 5 is mainly configured to reduce voltage, thereby reducing the voltage to a level suitable for operation of the signal control circuit 4.

The step-down circuit 5 according to embodiments of the present disclosure may be various types of step-down circuits currently known or available in the future, as long as a level of DC voltage can be reduced, embodiments of the present disclosure are not limited thereto. For example, in some embodiments, the step-down circuit 5 may include a linear step-down circuit. In some other embodiments, the step-down circuit 5 may include a buck converter circuit (Buck circuit).

With continued reference to FIG. 4, in some embodiments, the signal control circuit 4 may output a pulse width modulation (PWM) signal to control the indicator light 6 to flash. A high level signal can control the indicator light 6 to be turned on, and a low level signal can control the indicator light 6 to be turned off. By controlling the indicator light 6 to flash, an operator can be reminded in time in the case of reverse wiring.

In some embodiments, in the case of reverse wiring of positive and negative electrodes, instead of flashing of the indicator light 6, the signal control circuit 4 may make the indicator light 6 normally on through the control signal, so that the operator can also be reminded in this way.

It should be understood that the signal control circuit 4 according to embodiments of the present disclosure may be various types of signal control circuits currently known or available in the future, as long as the signal control circuit 4 can control the indicator light 6 to operate in an appropriate manner to give an alarm, which is not limited in embodiments of the present disclosure.

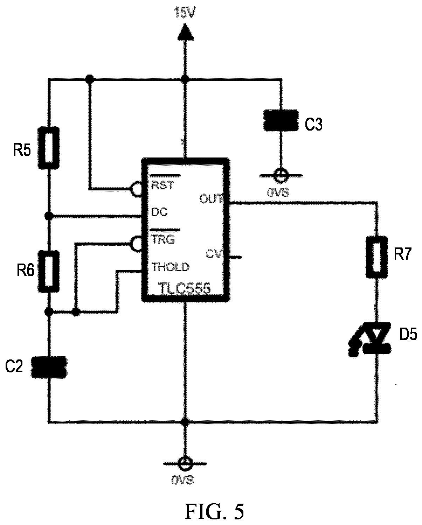

FIG. 5 illustrates a schematic circuit diagram of a signal control circuit 4 according to some embodiments of the present disclosure. The signal control circuit 4 shown in FIG. 5 is a 555 monostable circuit. The 555 monostable circuit can operate upon receiving a voltage provided via the diode 3 or the step-down circuit 5, thereby outputting the PWM signal.

Specifically, as shown in FIG. 5, when the positive and the negative electrodes of the socket are reversely wired, a voltage VCC is provided via the diode 3 or the step-down circuit 5, and a capacitor C2 is charged through a resistor R5 and a resistor R6. When a voltage of the capacitor C2 rises to 2/3 VCC, a RS trigger (reset/set trigger) built in the 555 monostable circuit is set to 0. The 555 monostable circuit can output a low-level signal and the indicator light 6 is turned off. At this time, the capacitor C2 discharges through a triode built in the 555 monostable circuit and the resistor R6, and when the voltage of the capacitor C2 drops to less than 1/3 VCC, the RS trigger built in the 555 monostable circuit is set to 1, that is, the 555 monostable circuit can output a high-level signal, and the indicator light 6 is turned on. This cycle controls the indicator light 6 to flash.

In addition, the signal control circuit 4 may further include a microcontroller unit (MCU). The MCU can operate upon receiving the voltage provided via the diode 3 or the step-down circuit 5, thereby outputting the PWM signal, which will not be repeated here.

Referring back to FIG. 1, in some embodiments, the light guide component 7 may be disposed within the base 1 adjacent to the indicator light 6, and the light guide component 7 can extend to a position adjacent to a surface of the base 1 to transmit light of the indicator light 6.

The light guide component 7 according to embodiments of the present disclosure may be made of various types of materials currently known or available in the future, as long as the light can be transmitted, embodiments of the present disclosure are not limited thereto. For example, in some embodiments, the material of the light guide component 7 may be acrylic.

With continued reference to FIGS. 1 to 3, in some embodiments, a light-transmitting groove 81 may be provided on a side of the surface cover 8 facing towards the base 1. An end of the light guide component 7 facing away from the indicator light 6 may be located within the light-transmitting groove 81. In this way, the customer can more intuitively observe the light of the indicator light 6, thereby avoiding a risk of reverse wiring.

The anti-reverse wiring design according to embodiments of the present disclosure may be applied to various DC sockets to at least partially solve the above problems. It should be understood that the anti-reverse wiring design according to embodiments of the present disclosure may also be applied to other electrical components, and embodiments of the present disclosure are not limited thereto.

Embodiments of the present disclosure have been described above, and the above description is exemplary, not exhaustive, and is not limited to the disclosed embodiments. Many modifications and variations will be apparent to those of ordinary skill in the art without departing from the scope of the illustrated embodiments. The selection of terms as used herein is intended to best explain the principles of embodiments, the practical application or technical improvements to the market, or to enable others of ordinary skill in the art to understand embodiments disclosed herein.

## Claims

1. A socket (100), **characterized by** comprising:
a base (1) comprising a positive wiring port (11) and a negative wiring port (12);
a diode (3) having an anode coupled to the negative wiring port (12);
a signal control circuit (4) coupled to a cathode of the diode (3) and the positive wiring port (11) to output a control signal when the diode (3) is turned on; and
an indicator light (6) coupled to the signal control circuit (4) to operate upon receiving the control signal.

2. The socket (100) according to claim 1, **characterized in that** the signal control circuit (4) comprises a 555 monostable circuit to output a PWM signal as the control signal to control the indicator light (6) to flash.

3. The socket (100) according to claim 1 or 2, **characterized in that** the socket (100) further comprises a step-down circuit (5) coupled between the cathode of the diode (3) and the signal control circuit (4).

4. The socket (100) according to claim 3, **characterized in that** the step-down circuit (5) comprises one of a linear step-down circuit and a buck converter circuit.

5. The socket (100) according to claim 3, **characterized in that** the socket (100) further comprises a printed circuit board (2) disposed within the base (1), and the diode (3), the signal control circuit (4), the step-down circuit (5) and the indicator light (6) are integrated on the printed circuit board (2).

6. The socket (100) according to any of claims 1 to 5, **characterized in that** the indicator light (6) is disposed within the base (1), and the socket (100) further comprises a light guide component (7) disposed within the base (1) adjacent to the indicator light (6) and extending to a location adjacent to a surface of the base (1).

7. The socket (100) according to claim 6, **characterized in that** the socket (100) further comprises a surface cover (8) covering the base (1), a side of the surface cover (8) facing towards the base (1) is provided with a light-transmitting groove (81), and an end of the light guide component (7) facing away from the indicator light (6) is located within the light-transmitting groove (81).

8. The socket (100) according to any of claims 1 to 7, **characterized in that** the socket (100) is a DC socket.
